# EUROPÄISCHE PATENTANMELDUNG

(11) **EP 1 639 904 A1**
(43) Veröffentlichungstag der Anmeldung: **29.03.2006**
(21) Anmeldenummer: 05011653.2
(22) Anmeldetag: 31.05.2005
(51) Int. Cl.: A23L 1/317, A23L 1/31, A23L 1/325, A23B 4/06

(54) **Zerkleinertes oder unzerkleinertes, vorgegartes Fleisch das in rohem Teig abgeformt und dann gebacken wird**

(30) Priorität: 07.06.2004 DE 102004027727
(71) Anmelder: Goetz-Schülling, Ellen, 97522 Sand a. Main (DE)
(72) Erfinder: Schülling, Christof, 97522 Sand a. Main (DE)
(74) Vertreter: Lösch, Christoph Ludwig Klaus

(57) **Zusammenfassung**

Die Erfindung betrifft vorgegartes Fleisch oder Fisch, der geschnitten, zerkleinert, gehackt, ungehackt oder abgeformt auf rohen Teig aufgebracht wird, dann wahlweise mit oder ohne Käse, Gemüse, Salat, Würzsoßen oder Gewürze komplettiert wird und erst dann im Ofen oder Fett ausgebacken wird.

## Beschreibung

### 1.Die Erfindung betrifft:

gehacktes,oder ungehacktes , im Fleischwolf zerkleinertes, oder geschnittenes Fleisch,Fisch, ,alle Sorten, (abgeformt gerundet/eckig, wie Hamburger,oder ähnlich),in rohen Teig, kombiniert mit weitem Zutaten, nach Wahl,wie z.B. Käse, und/oder Gemüse, und /oder Salat,gefüllt oder ungefüllt mit Würzsoßen, alles komplett in rohen Teig gefüllt und dann erst ausgebacken.

### 2.Stand der Technik:

In der Gastronomie, Fastfood,Lebensmittelgewerbe,Handel, sind Fleischsteaks, gehackt oder ungehackt,geschnittenes Fleisch, bekannt, die gebraten werden um Sie dann in ein Brot od Brötchen, das gebacken und aufgeschnitten, verschiedenster Art, aus den verschiedensten Kulturen, zu legen, garniert mit Salat, Gemüse,Würzsoßen usw. je nach Geschmack, verkaufsfertig herzustellen.

### 3.Die Erfindung beruht auf folgenden Überlegungen:

Überall,wo die von den Fastfood ketten wie z. B. Mac Donalds, Burger King und anderen, die gehackten und ungehackten Fleischsteaks, gebraten auf vorgebackene aufgeschnittene Brötchen,Buns genannt,gelegt werden,mit Salat, Gemüse, Käse und Würzsoßen garniert und verkauft werden, entsteht sehr viel Arbeit, Zeitverlust,das Personal muß Fachwissen besitzen, oder eingelernt ,werden, Hygienebedingungen sind einzuhalten , dafür bestimmte teure Gerätschaften sind anzuschaffen.
Man denke an die Abgabe solcher Fast Food Artikel bei Großveranstaltungen, in Fußballstadien oder Rockkonaerten u.a.m. wo in kurzer Zeit Tausende von diesen sogenannten Hamburgern abgegeben werden könnten.
Die oben genannte Erfindung macht es sich zur Aufgabe, das Braten,Fallen aller notwendiger Zutaten, wie Fleisch,
Fisch,gehackt,ungehackt,geschnitten,zerkleinert,Salat,Gemüse,Würzsoßen bereits vor dem Backprozess,in jeweils großen/kleinen Einheiten manuell oder automatisch mit der Maschine, in den Teig zu geben, um dann den gefüllten Teig im Ofen oder Fett auszubacken.
Das fertig gebackene Produkt kann dann kalt od. warm errtweder sofort in den Verkauf gehen, oder tiefgefroren, in der Kühlkette, zum jeweiligen Abnehmer transportiert werden, der dann vor Ort das Produkt auftaut und wann od. kalt seinen Kunden zum Kauf anbietet.

### 4. die sich hieraus ergebenden Aufgaben werden wie folgt gelöst:

das gegarte Fleisch,Fisch (gehackt,ungehackt,geschnitten, zerkleinert, abgeformt), wird in einen vorbereiteten Teig,geschmacklich abgestimmt je nach Charakter des gewünschten fertigen Gebäckstückes, einbracht und individuell mit weiteren Zutaten, wie Salat und/oder Gemüse, und oder Käse, und/oder Gewürzsoßen versehen.

Der fertige gefüllte Teigling, wird dann entweder im Ofen,oder Fettbad, ausgebacken.

## Patentansprüche

1. Das vorgegarte Fleisch ,Fisch, geschnitten zerkleinert, gehackt, ungehackt, abgeformt, wird auf rohen Teig aufgebracht.Wahlweise mit/ohne Käse,mit/ohne Gemüse, mit/ohne Salat, mit/ohne Würzsoßen, Gewürze,komplettiert und erst dann im Ofen oder Fett ausgebacken.
